# EUROPEAN PATENT APPLICATION

(11) **EP 1 833 247 A1**
(43) Date of publication of application: **12.09.2007**
(21) Application number: 05771306.7
(22) Date of filing: 26.07.2005
(51) Int. Cl.: H04N 5/74

(54) **APPARATUS FOR PROJECTING VIDEO IMAGE AND METHOD THEREOF**

(30) Priority: 28.12.2004 CN 200410102592
(71) Applicant: Yuan, Ning, Beijing 100080 (CN); Zhang, Li, Haidian District Beijing 100089 (CN)
(72) Inventor: Yuan, Ning, Beijing 100080 (CN); Zhang, Li, Haidian District Beijing 100089 (CN)
(74) Representative: De Gregori, Antonella
(86) International application number: PCT/CN2005/001124
(87) International publication number: WO 2006/069510

(57) **Abstract**

An apparatus for projecting video image comprises a CPU for producing all kinds of controll signals, a signal converting circuit, a Firstin First-out memory unit for converting the digital video signal streams into the video signal streams with time character, a serial/parallel converting unit and a playing unit for playing video image of color visible light. The apparatus also comprises three primary colors emitting diode lines for producing color visible light, convergent lens lines for converging color visible light, lumen emitting diode element, light beam lens, light beam slit, mirror surface triple prism or mirror surface multiprism for receiving and reflecting the mixed color visible light and negative lens for receiving single direction diffuseness of mixed color visible light and projecting on the screen, so that the received analog singal streams can product sequential dynamic color visible picture. The apparatus for projecting video image of the present invention is portable and has low power loss and low cost. The definition of projection and the lumen illumination are improved and the electromagnetic noise is reduced by utilizing the present invention. The present invention also relates to the method for projecting video image.

## Description

### Field of Technology

The present invention generally relates to an apparatus for processing video image and a method thereof and particularly relates to a method for projecting video image and a method thereof.

### Background Art

The currently used projecting devices mainly comprise Cathode-ray Tube (CRT) projectors, LCD projectors, DLP projectors and so forth.

The CRT projectors provide RGB analog signals to cathode-ray tubes to emit light under high voltage and through signal amplification and convergence, color images are displayed on a screen. The images projected by the CRT projectors have good picture restoration and good colors, but the machines have a low luminance and need to be debugged by the technicians for use. Moreover, the CRT projectors have a large weight and bulk, so they are not portable and cannot be conveniently used. To accomplish the optimum image convergence, the CRT projectors are required to have a good correcting function for distortions in plural situations of projected images. After being installed, the CRT projectors generally cannot be randomly moved; otherwise convergence has to be readjusted, the convergence adjustment includes image rotation, trapezoid distortion, arc distortion, broad and narrow amplitude, and the like. Next is a focusing performance. A definition of CRT tubes is determined by the focusing performance (the minimum number of pixels determines the definition of a picture). Magnetic focusing is popularly used and it is advantageous of having good focusing and margin focusing performances and having a high focusing accuracy and is capable of performing sub-area focusing and margin focusing, but the CRT projectors have belonged to non-mainstream products in the projector market.

The LCD projectors consist of three-chip machines and single-chip machines. At present, the three-chip projectors are the main machine type of the LCD projectors. The principle of the three-chip LCD projectors lies in that an optical system causes a strong light to pass through a beam splitter to form red, green and blue light so as to respectively penetrate a RGB three-color LCD panel. A signal source, after the A/D conversion, is modulated and then applied to a LCD panel, and by controlling an ON/OFF state of an optical path, the red, green and blue light are finally converged at a prism thereby to form a color image. The LCD panel used for the LCD projectors is made of an active liquid crystal body having a light-transmitting property and a control system can be used for controlling luminance, color, contrast and the like of the light penetrating the LCD. The LCD projectors influence transmittance or reflectivity of their LCD units by means of the photoelectric effect so as to influence optical properties thereof to generate images having different gray scales and colors. The size of the LCD panel decides the size of the projector, and the smaller the LCD is, the smaller the optical system of the projector can be made, so that the projector is made smaller and kept bright. Thus, the difficulty of the technique of manufacturing the LCD projectors may be well imagined.

The available DLP projectors in the current market adopt the patented technique of the U.S. Texas Instruments (TI), which utilizes a surface digital micro mirror device (DMD) as an imaging device and outputs a large-screen image through signal amplification. A DMD chip contains thousands of micro mirrors each representing a pixel, and a pixel of a picture can be projected in an ON/OFF state. DLP is capable of generating color under the effect of a color wheel placed on a light source path, and light emitted from the light source is projected via a RGB filter to a microchip surface into which an array of micro mirror are set. These micro mirrors are turned at a speed of 5000 times per second and they generate an image by reflecting the light projected thereto, so the DLP projecting technique is also called the reflex projecting technique. The image generated by this type of projectors is quite bright and has precise and fine colors. Owing to the application of the digital technique, the gray level and the signal-to-noise ratio of an image are improved, the quality of picture is fine and steady, and the digital image is fairly precise. Owing to the application of the reflex DMD device, a small distance exists between the micro mirrors constituting DLP pixels, the total optical efficiency of the imaging device reaches above 85%, and the contrast, brightness and uniformity are excellent. The DLP projectors achieve a high definition and a uniform picture and adopt single-piece DMD chips and generate colors by using rotatable filters. There are also the projectors made of two-piece or three-piece DMD chips, whose brightness may achieve 1-200ANSI lumen, and these projectors can randomly zoom and be conveniently adjusted, but they have high costs.

According to the above description of the CRT projectors, LCD projectors and DLP projectors, these three types of projectors are common in having large power consumption, needing a blower heat dissipation system and a high-power lumen system and the like, being realized with technical difficulties, taking high costs, and having large bulk and great weight.

### Summary of the Invention

An object of the present invention is to provide an apparatus for projecting video image and a method thereof, thereby overcoming the above drawbacks.

The present invention provides an apparatus for projecting video image, comprising an interface for receiving video input signals inclusive of video signals and synchronization signals; a CPU for producing various kinds of control signals in accordance with the synchronization signals from the interface; a signal converting unit for converting the video input signals to digital video data streams in accordance with the controls signals from the CPU; a First-in First-out memory unit for receiving and temporarily storing digital video signals from the signal converting unit, converting said digital video signals to video data streams with time character in accordance with the control signals from the CPU, and outputting the video data streams with time character under control of the CPU; a serial/parallel converting unit for receiving the video data streams with time character from the First-in First-out memory unit in accordance with the control signals from the CPU and serial/parallel converting them to parallel video data streams; three primary colors or multiple primary colors emitting diode lines comprising a plurality of three primary colors or multiple primary colors emitting diode units, for causing the corresponding three primary colors or multiple primary colors emitting diodes units to emit light under the excitation of the parallel video data streams, so as to produce color visible light of various different color combinations; convergent lens lines comprising a convergent lens configured at a luminous terminal of each of the three primary colors or multiple primary colors emitting diode units, for focusing the color visible light produced by each of the three primary colors or multiple primary colors emitting diode units to form color visible light lines; lumen emitting diode units for controlling illuminating one to plural sets of lumen emitting diodes to produce lumen visible light in accordance with the control signals of the CPU, based on the conditions required by different lumen illuminations; a light beam lens for receiving mixed color visible light formed by the color visible light lines and the lumen visible light, the mixed color visible light penetrating the light beam lens and subjected to parallel processing; a light beam slit having a slit of a predetermined width for performing parallel processing of the mixed color visible light and constraining it to narrow bars; a mirror surface triple prism or a mirror surface multiprism, driven by an electric machine to synchronously rotate, for receiving the mixed color visible light in narrow bars at a constantly variable incidence angle and reflecting it; a negative lens (1-7) for receiving the mixed color visible light in narrow bars reflected by the mirror surface triple prism or mirror surface multiprism, the mixed color visible light penetrating the negative lens and being transversely diffused, the negative lens having a curvature that meets the requirements for forming a visible color video image by the mixed color visible light, so that the mixed color visible light is uniformly diffused in a single direction and projected on the screen; the incidence angle at which the continuous mixed color visible light produced under the effect of the parallel video data streams and lumen control signals irradiates a mirror surface of the mirror surface triple prism or mirror surface multiprism varies at a constant speed in a constant direction, so does a reflection angle of the corresponding mixed color visible light. Thus, different positions on a certain plane irradiated by the continuous mixed color visible light reflected produce lines composed of light spots of the continuous mixed color visible light parallel with the turning direction of the mirror surface triple prism or mirror surface multiprism, and the lines composed of continuous light spots constitute each line of the color video image, thereby forming a visible video image; when the mirror surface triple prism or mirror surface multiprism is rotated to an angle contained by respective mirror surfaces, the First-in First-out memory chip is controlled to stop the output of data streams with time character, namely, controlling the corresponding three primary colors or multiple primary colors emitting diode units to stop irradiation, while when the mirror surface triple prism or mirror surface multiprism is rotated to a starting end of the next mirror surface, the First-in First-out memory chip is controlled to start the output of data streams with time character, namely, controlling the corresponding three primary colors or multiple primary colors emitting diode units to start irradiation, and the reflection produced by the continuous mixed color visible light forms a next visible light video image, and iteratively doing so, a continuous dynamic color visible picture provided by the received analog signal data streams is thus formed.

According to the present invention, the serial/parallel converting unit can be integrated into a color visible light video image playing unit CLVIP, and the signal leads of the serial/parallel converting unit corresponding to the three primary colors emitting diode lines are arranged on a dedicated circuit board.

According to the present invention, the color visible light video image playing unit CLVIP comprises inside a casing: three primary colors emitting diodes lines and convex lens lines mounted on a support, lumen emitting diodes units mounted on a support, a light beam lens and a light beam slit mounted on a support, an electric machine mounted on a support, a mirror surface triple prism or mirror surface multiple prism mounted on a support, the electric machine being coaxial with the mirror surface triple prism or mirror surface multiple prism at the support, and comprises a negative lens mounted on the casing; wherein the electric machine drives the mirror surface triple prism or mirror surface multiple prism to synchronously rotate; a housing connects the respective supports by soldering or using a heat-resistant adhesive substance; inside the casing, the parts, other than light emitting parts and light receiving parts, are coated with a non-reflective material, and the casing and the respective supports are all composed of a metal or a substance having a good heat dissipation property; wherein the negative lens causes the mixed color visible light to penetrate and diffuses the mixed color visible light in a single direction, and it is a video image playing window of the apparatus for projecting video image in the present invention.

According to the present invention, the serial/parallel converting unit, according to the specific definition requirement, performs series/parallel conversion of the video data streams with time character to parallel video data streams in the number of pixels required by the specific definition. The mixed color visible light forms rows or columns of video image, and the columns or rows of the video image are acquired by rotating the mirror surface of the mirror surface triple prism or mirror surface multiprism to produce different incidence angles for the mixed color visible light and reflecting the mixed color visible light.

According to the present invention, the three primary colors or multiple primary colors emitting diode lines are composed of three primary colors or multiple primary colors emitting diode units arranged in one line or two lines, a bright RGB laser luminotron or a bright RGB LED forming a three primary colors emitting diode unit, and they emit light in the same direction and lead out corresponding signal connections; the three primary colors or multiple primary colors emitting diode lines have the three primary colors emitting diode units the number of which is the same as the number of pixels of the definition of the parallel video data streams, and under the excitation of the parallel video data streams, the corresponding three primary colors emitting diodes units are irradiated to emit light thereby to produce color visible light of various color combinations; the three primary colors emitting diode lines and the convergent lens lines can be integrated; in order to improve color degrees, the three primary colors emitting diode units can be substituted by the multiple primary colors emitting diode units; the convergent lens lines can be substituted by a single convergent lens having the same convergence function; the light beam lens and the light beam slit can be integrated.

According to the present invention, each prism surface of the mirror surface triple prism or mirror surface multiprism has an arc mirror surface so that the pixels of the reflected mixed color visible light on an irradiating plane are uniformly distributed; the arc mirror surface is subjected to the surface mirror finishing to produce a high reflectivity, the arc mirror surface is smoothly jointed with the prism surface at a first arc and a second arc, and a third arc and a fourth arc are smoothly jointed with the arc mirror surface; the arc mirror surface starts receiving and reflecting the mixed color visible light at its starting point and stops receiving and reflecting the mixed color visible light at its ending point.

According to the present invention, the curvature of the negative lens is selected so that a projection image of the mirror length of the negative lens only having the mirror surface triple prism or mirror surface multiple prism is widened in a single direction, namely, widening rows or columns of the video image, whereby the acquired video image meets the aspect ratio requirement and produces a visible light color video image on a desired plane or screen; a plurality of negative lenses and other lenses can form a lens group according to specific requirements, the lens group control signals from the CPU controlling the extent to which the lens group diffuses the mixed color visible light in a single direction, focusing and other processing being performed for its definition.

According to the present invention, the interface, CPU, signal converting unit, First-in First-out memory unit, serial/parallel converting unit and the like are all arranged on a dedicated circuit board, inside the dedicated circuit board are electric bonding leads to be connected with the above parts, and the dedicated circuit board inputs and outputs various signals that are correspondingly connected via a cable and interface.

The present invention provides a method for projecting video image, comprising the steps of:
a) receiving video input signals inclusive of video signals and synchronization signals;
b) a CPU producing various kinds of controls signals in accordance with the synchronization signals;
c) converting the video input signals to digital video data streams in accordance with the control signals;
d) converting the digital video data streams via a First-in First-out memory unit to video data streams with time character in accordance with the control signals, and outputting the video data streams with time character under control of the CPU;
e) series/parallel converting the video data streams with time character to parallel video data streams in accordance with the control signals;
f) delaying electric machine rotating speed and synchronization control signals produced by the CPU by a period of time at the same time of performing steps c-e, thereby guaranteeing synchronization with the conversion from the video input signals to the parallel video data streams P-RGB;
g) three primary colors emitting diode units in three primary colors emitting diode lines emitting light under excitation of the corresponding parallel video data streams, to produce color visible light of different color combinations and converging the color visible light to color visible light lines; meanwhile, lumen emitting diode units controlling, under control of the CPU, illuminating one to plural sets of lumen emitting diodes to produce lumen visible light according to different lumen illumination requirements;
h) the color visible light lines and the lumen visible light forming mixed color visible light, the mixed color visible light being subjected to parallel processing and constrained into narrow bars;
i) a mirror surface triple prism or mirror surface multiprism rotating synchronously at a constant speed, and receiving and reflecting continuous mixed color visible light produced under control of the video data streams with time character, the continuous mixed color visible light having a continuously varied incidence angle;
j) a negative lens receiving continuous mixed color visible light in narrow bars reflected by the mirror surface triple prism or mirror surface multiprism, the continuous mixed color visible light penetrating the negative lens and irradiating a plane after being diffused in a single direction to form respective rows of a color video image, thereby forming a color visible image; and
k) controlling, when the mirror surface triple prism or mirror surface multiprism is rotated to an angle contained by respective mirror surfaces, a First-in First-out memory chip to stop the output of data streams with time character, namely, controlling the corresponding three primary colors or multiple primary colors emitting diode units to stop irradiation, whereas controlling, when the mirror surface triple prism or mirror surface multiprism is rotated to a starting end of the next mirror surface, the First-in First-out memory chip to start the output of data streams with time character, namely, controlling the corresponding three primary colors or multiple primary colors emitting diode units to start irradiation, repeating steps e-j, the reflection produced by the continuous mixed color visible light forming a next visible light video image, and iteratively doing so, a continuous dynamic color visible picture provided by the received analog signal data streams being thus formed.

By using the apparatus for projecting video image according to the present invention which has a simple design and structure, the projectors are made portable, weight-lightened, to have low power consumption and low costs, to have an improved definition of projection and lumen illumination and to reduce the electromagnetic noise and to spare the use of blower.

### Brief Description of the Accompanying Drawings

Fig. 1 is a circuit block diagram of the apparatus for projecting video image according to the present invention;
Fig. 2 is a structural top view of the color visible light video image playing unit CLVIP of the apparatus for projecting video image according to the present invention;
Fig. 3 is a structural frontal view of the color visible light video image playing unit CLVIP of the apparatus for projecting video image according to the present invention as shown in Fig. 1;
Fig. 4A and Fig. 4B are frontal and profile views of partial enlargement of the negative lens shown in Fig. 3;
Fig. 5 is a view of partial enlargement of the arc mirror surface of the mirror surface triple prism or mirror surface multiprism;
Fig. 6 is a workflow diagram of the method for projecting video image according to the present invention;
Fig. 7 is a circuit diagram of the RGB signal converting unit of the apparatus for projecting video image according to the present invention;
Fig. 8 is a circuit diagram of the CPU control unit of the apparatus for projecting video image according to the present invention;
Fig. 9 is a circuit diagram of the FIFO memory unit of the apparatus for projecting video image according to the present invention;
Fig. 10 is a partial circuit diagram of the serial/parallel converting unit for RED in the apparatus for projecting video image according to the present invention;
Fig. 11 is a partial circuit diagram of the serial/parallel converting unit for RED in the apparatus for projecting video image according to the present invention;
Fig. 12 is a partial circuit diagram of the serial/parallel converting unit for GREEN in the apparatus for projecting video image according to the present invention;
Fig. 13 is a partial circuit diagram of the serial/parallel converting unit for GREEN in the apparatus for projecting video image according to the present invention;
Fig. 14 is a partial circuit diagram of the serial/parallel converting unit for BLUE in the apparatus for projecting video image according to the present invention;
Fig. 15 is a partial circuit diagram of the serial/parallel converting unit for BLUE in the apparatus for projecting video image according to the present invention;

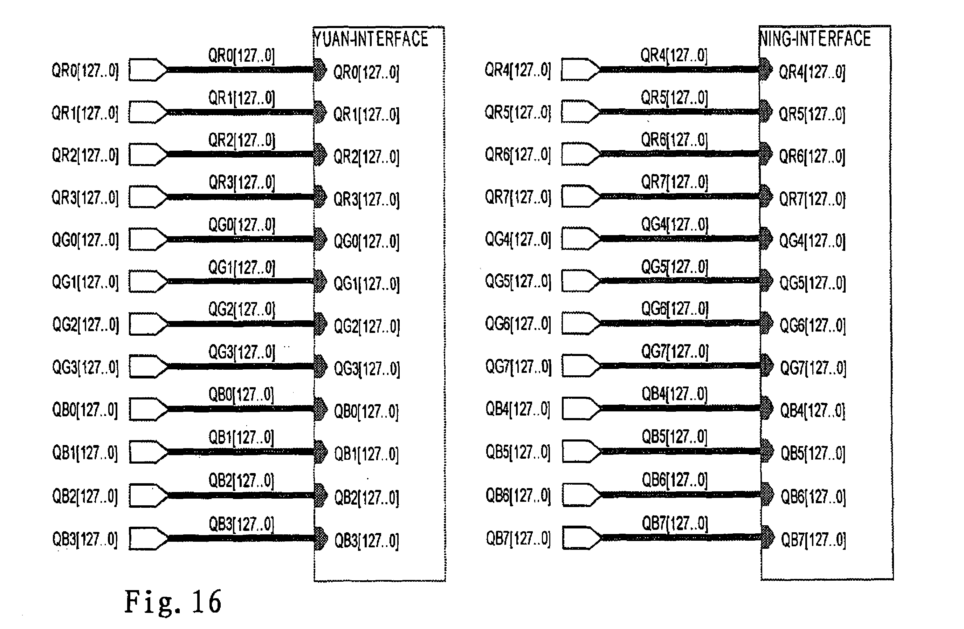

Fig. 16 is a circuit diagram of the interface in the apparatus for projecting video image according to the present invention; and
Fig. 17 is a workflow block diagram of a program for the apparatus for projecting video image according to the present invention.

### Detailed Description of the Preferred Embodiments of the Invention

The signals received by the apparatus for projecting video image according to the present invention can be analog RGB video data streams, analog CVBS video data streams, S-VIDEO video data streams, DVD video data streams and the like. Thus, the apparatus for projecting video image first utilizes different processing chips to convert analog video signals and non-24-bit RGB digital video signals to 24-bit digital RBG video signals, i.e., the digital RGB video data streams with RED, GREEN and Blue in 8 bits, respectively.

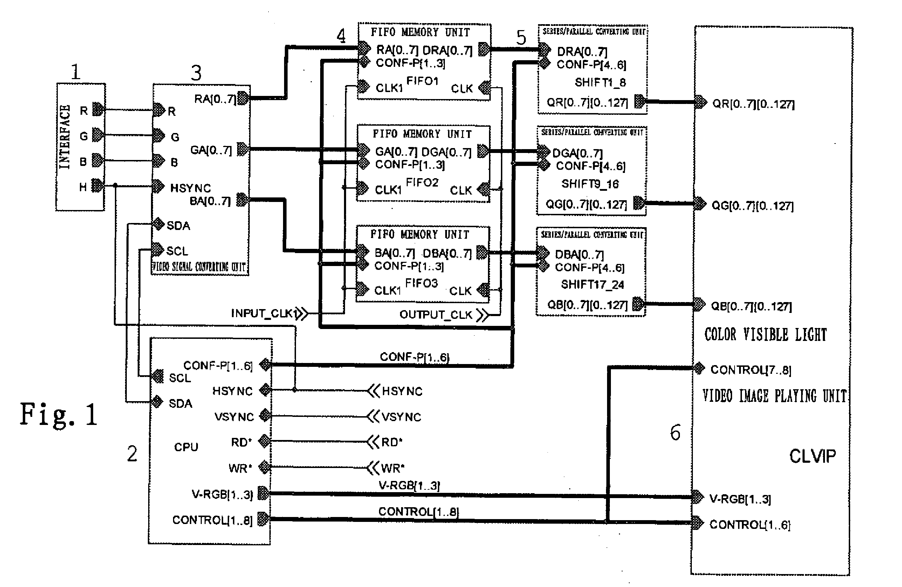

Detailed description is made with reference to Fig. 1, by taking as an example converting analog RGB video signals to 24-bit digital D-RGB video data streams.

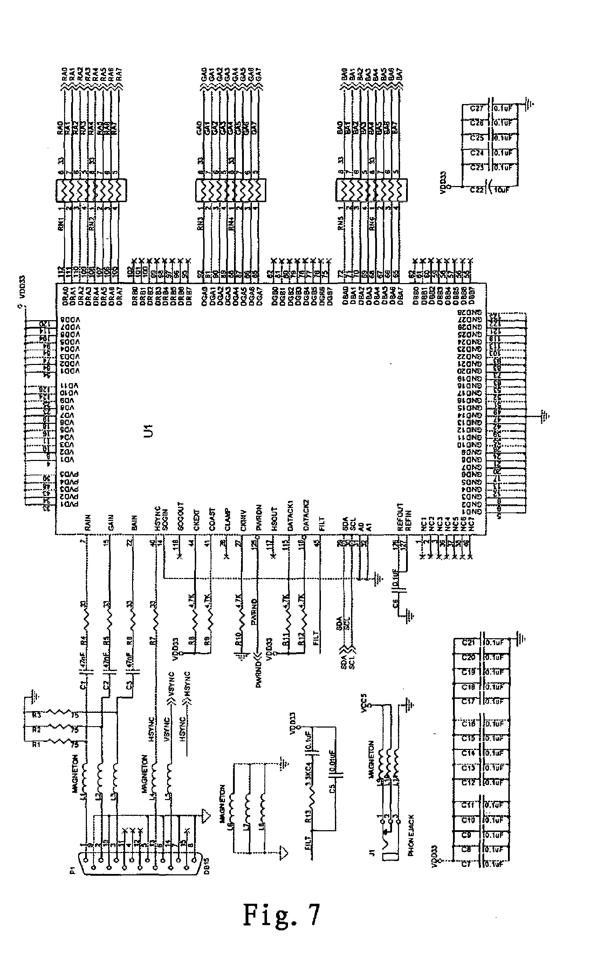

Fig. 1 is a schematic circuit diagram of the apparatus for projecting video image according to the present invention, wherein an interface 1 (P1, Fig. 7) receives the analog RGB video signals inclusive of RED (R), GREEN (G) and BLUE (B) signals, horizontal synchronization signals HSYNC and vertical synchronization signals VSYNC.

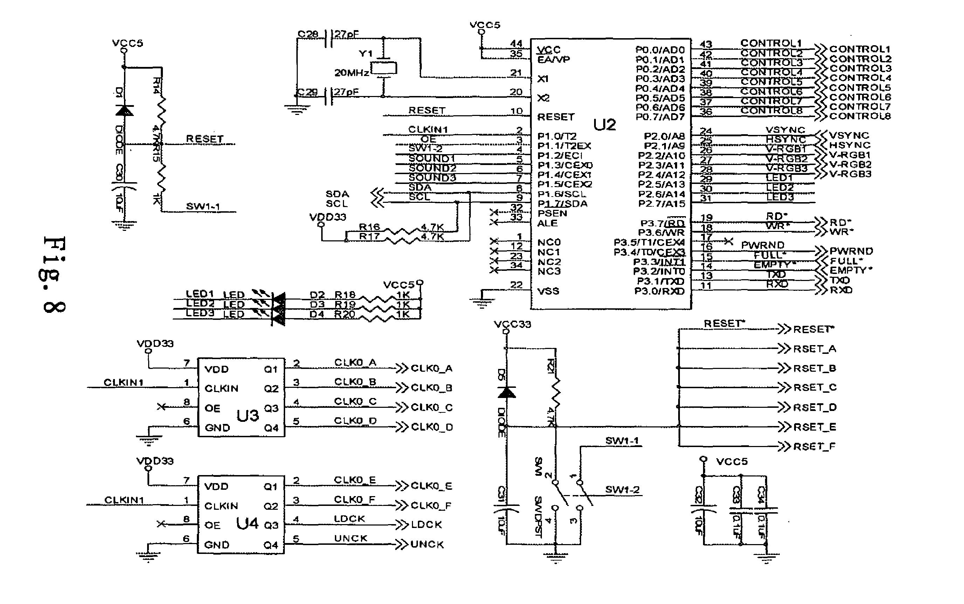

A CPU 2 (Fig. 8, U2) utilizes the horizontal synchronization signals HSYNC as synchronization reference signals to generate various kinds of control signals: for example, control signals SDA and SCL of a video signal converting unit 3, control signals CONF [1..3] of a FIFO memory unit 4, control signals CONF [4..6] of a series/parallel converting unit 5, lens group control signals CONTROL [7..8] of a color visible light video image playing unit CLVIP 6, control signals V-RGB [1..3] controlling electric machines 1-6 to rotate and drive a mirror surface triple prism or mirror surface multiprism to rotate synchronously, lumen illumination signals CONTROL [1..6] controlling a lumen emitting diode unit 10 to produce lumen visible light, and the like.

The video signal converting unit 3 (U1, Fig. 7) receives analog video signals RGB from the interface 1 and converts, under control of the control signals SDA and SCL of the CPU 2, the received analog video signals RGB to 24-bit digital video data streams D-RGB, wherein the digital video data streams D-RGB contain RED (R) RA [0..7], GREEN (G) GA [0..7], BLUE (B) BA [0..7] in 8 bits, respectively.

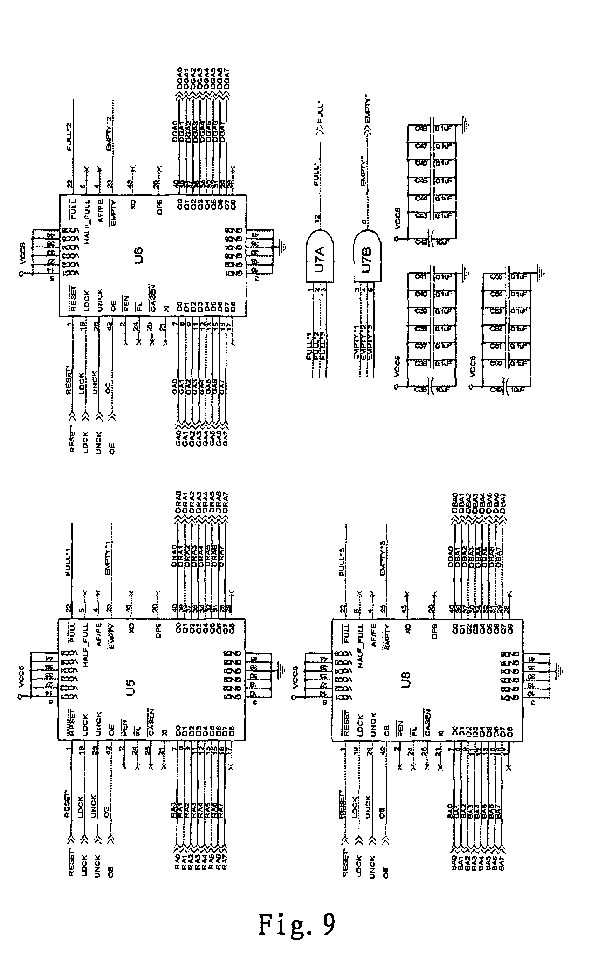

The FIFO memory unit 4 receives the digital video data streams D-RGB provided by the signal converting circuit 3 and inputs them to FIFO1-FIFO3 (U5, U6, U8, Fig. 9) of the FIFO memory unit 4 for temporal storage. An output clock OUTPUT_CLK of FIFO1-FIFO3 is faster than an input clock INPUT_CLK1, and under control of the control signals CONF-P [1..3] of the CPU2, the FIFO memory unit 4 assign time character to the D-RGB digital video data streams so that the digital video data streams D-RGB is converted to video data streams H-RGB with time character, wherein the video data streams H-RGB with time character contain RED (R) DRA [0..7], GREEN [G] DGA [0..7], BLUE (B) DBA [0..7] in 8 bits, respectively. The FIFO memory unit 4 outputs the video data streams H-RGB with time character in periods and segments according to the time character stipulated by the CPU 2.

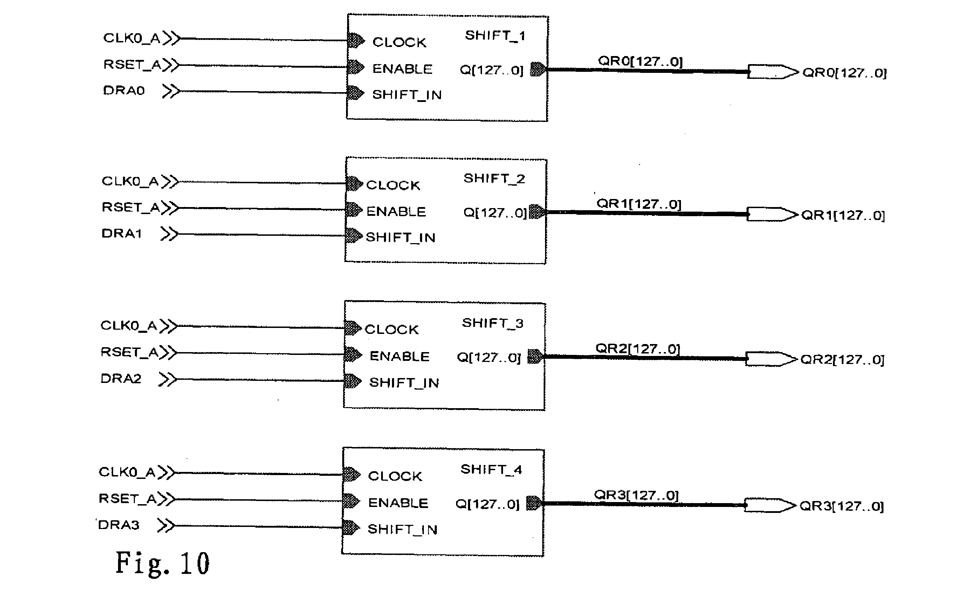

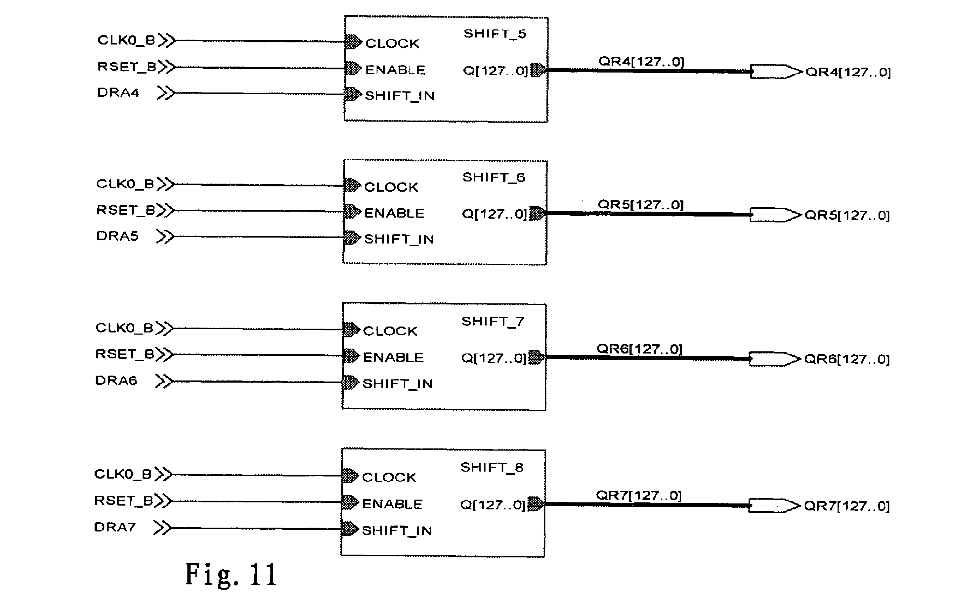

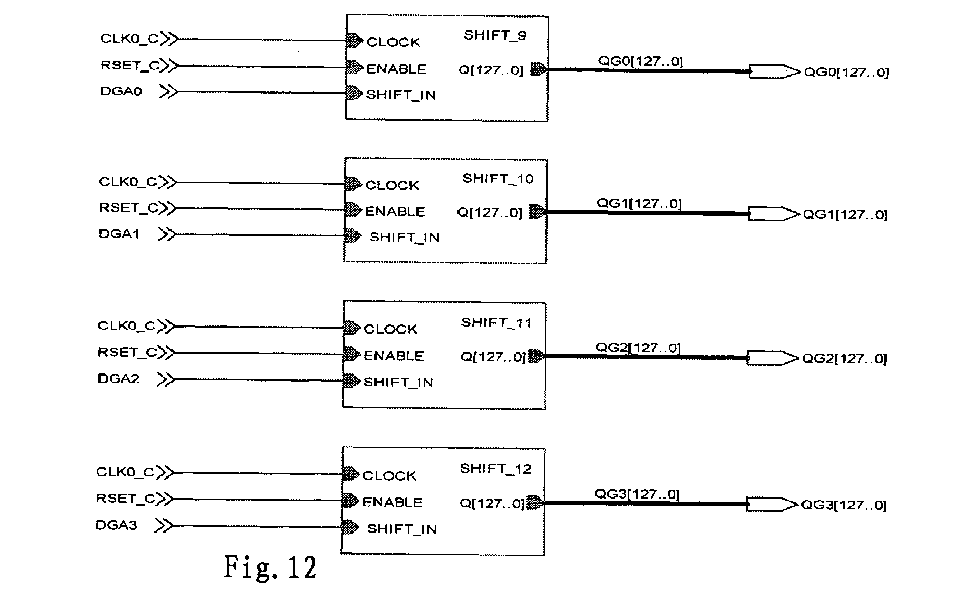

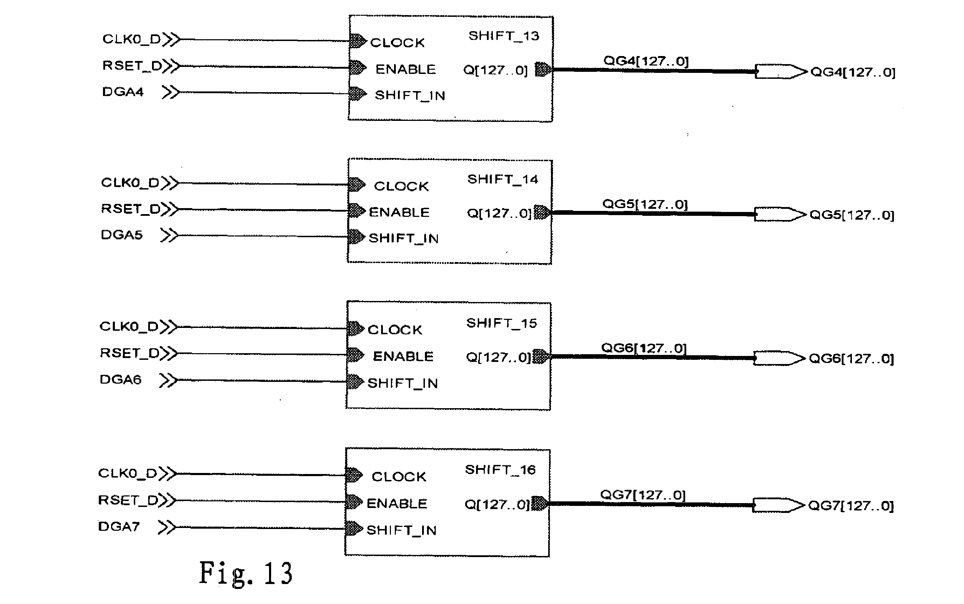

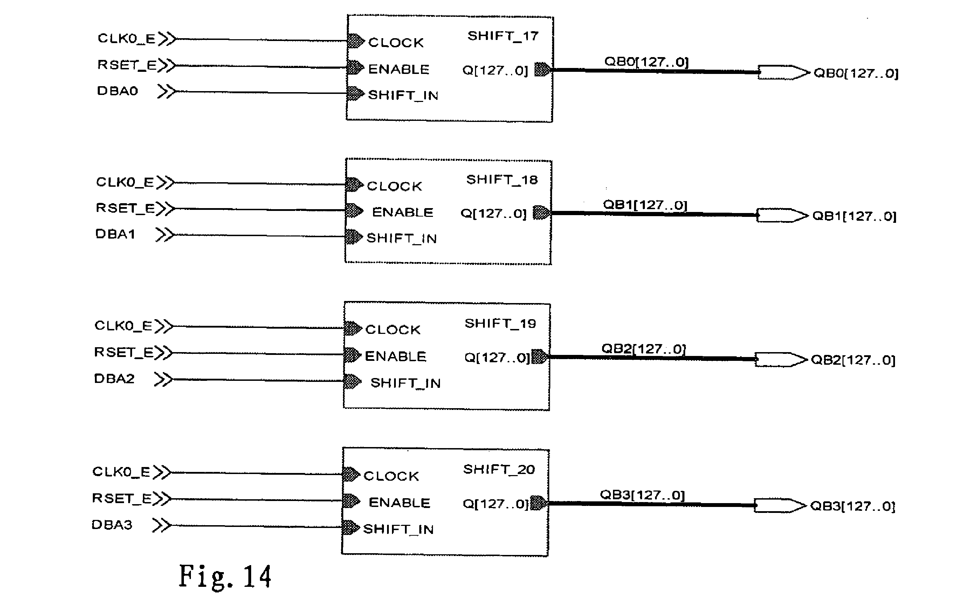

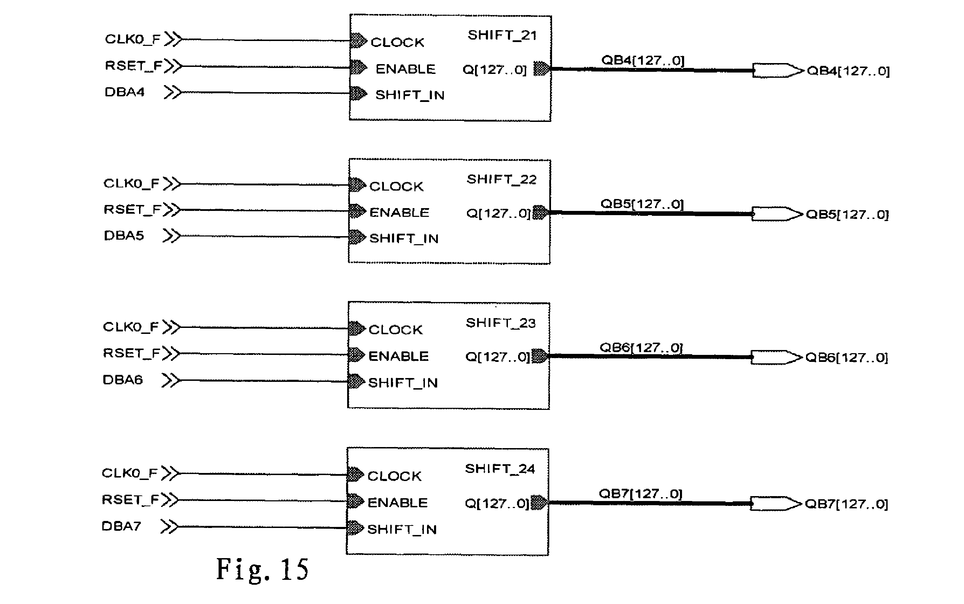

The serial/parallel converting unit 5 receives the video data streams H-RGB with time character from the FIFO memory unit 4 and inputs, under control of the control signals CONF-P [4..6] of the CPU 2, each bit of the video data streams H-RGB with time character to SHIFT 1-8, SHIFT 9-16, and SHIFT 17-24 (Figs. 10-15) of the serial/parallel converting unit 5. The serial/parallel converting unit 5 converts the video data streams H-RGB with time character to parallel video data streams P-RGB in the number of pixels required by the specific definition according to the requirements of the specific definition. For example, an image has 1024*768 pixels, and according to the requirement of the 1024*768 definition for the number of pixels, the serial/parallel converting unit 5 converts the video data streams H-RGB with time character to parallel video data streams P-RGB with RED, GREEN and BLUE in 1024 bits, respectively, wherein the parallel video data streams P-RGB contain RED (R) QR [0..7] [0..127], GREEN (G) QG [0..7] [0..127], and BLUE (B) QB [0..7] [0..127].

The color visible light video image playing unit CLVIP 6 has the function of playing color visible light video images and receiving the parallel video data streams P-RGB, electric machine rotating speed and synchronization control signals V-RGB [1..3] of the CPU 2, lumen illumination control signals CONTROL [1..6] of the lumen emitting diode units, as well as lens group control signals CONTROL [7..8], etc.

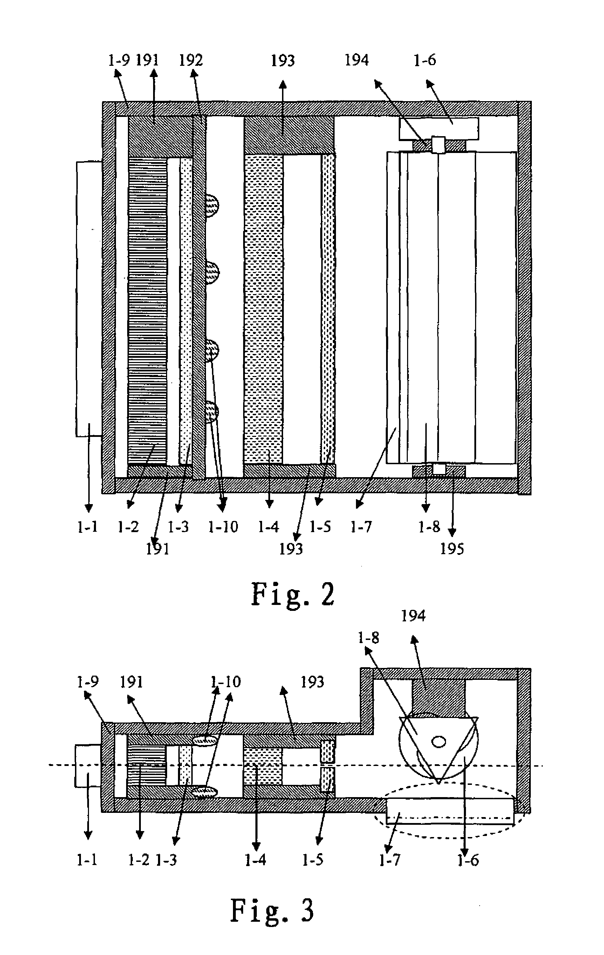

The composite structure and working principle of the color visible light video image playing unit CLVIP 6 are described below in detail in conjunction with Figs. 2, 3, 4A, 4B and 5.

As shown in Figs. 2 and 3, the color visible light video image playing unit CLVIP 6 comprises a signal and power supply interface 1-1 mounted on a casing 1-9, the interface 1-1 receiving the parallel video data streams P-RGB, electric machine rotating speed and synchronization control signals V-RGB [1..3] of the CPU 2, lumen illumination control signals CONTROL [1..6] of the lumen emitting diode units, as well as lens group control signals CONTROL [7..8], etc.

The color visible light video image playing unit CLVIP 6 comprises inside the casing 1-9: three primary colors emitting diodes lines 1-2 and convex lens lines 1-3 mounted on a support 191, lumen emitting diodes units 1-10 mounted on a support 192, a light beam lens 1-4 and a light beam slit 1-5 mounted on a support 193, an electric machine 1-6 mounted on a support 194, a mirror surface triple prism or mirror surface multiple prism 1-8 mounted on the support 194 and a support 195, the electric machine 1-6 being coaxial with the mirror surface triple prism or mirror surface multiple prism 1-8 at the support 194, and comprises a negative lens 1-7 mounted on the casing 1-9. The electric machine 1-6 is coaxial with the mirror surface triple prism or mirror surface multiprism 1-8 and drives the mirror surface triple prism or mirror surface multiple prism 1-8 to synchronously rotate. A housing 1-9 connects the respective supports 191-195 by soldering or using a heat-resistant adhesive substance. Inside the casing 1-9, the parts, other than light emitting parts and light receiving parts, are coated with a non-reflective material, and the casing 1-9 and the respective supports 191-195 are all composed of a metal or a substance having a good heat dissipation property. The negative lens 1-7, also called divergent lens or negative meniscus lens, causes the mixed color visible light to penetrate the negative lens 1-7 and diffuses the mixed color visible light in a single direction, and it is a video image playing window of the apparatus for projecting video image in the present invention.

In the color visible light video image playing unit CLVIP 6, the interface 1-1 is used for receiving parallel video data streams, lumen illumination control signals, electric machine rotating speed and synchronization control signals, lens group control signals and power source signals. The three primary colors emitting diode lines 1-2 has the function of producing color visible light; the three primary colors emitting diode units are all made with a RGB bright laser visible light luminotron or a RGB bright visible light LED and they are arranged in one line or two lines and lead out signal and power source connections to form the three primary colors emitting diode lines 1-2. When it is necessary to improve the color degree, the three primary colors emitting diode units can be substituted by multiple primary colors emitting diode units. For instance, the RGB bright laser visible light luminotron or RGB bright visible light LED in red, fuchsine, yellow, green, cyan and blue is installed respective peaks and a center of a polygon to form multiple primary colors emitting diode units, and the multiple primary colors emitting diode units are arranged in one line or two lines to form multiple primary colors emitting diode lines. The lumen emitting diode units are made with a bright white/colorless laser lumen visible light luminotron or a bright white/colorless lumen visible light LED and have the function of producing lumen visible light according to the lumen illumination requirement.

The three primary colors emitting diode lines 1-2 are made with 128-2048 or even more three primary colors emitting diode units arranged in one line or two lines, and on a light emitting end of each three primary colors emitting diode unit is configured a corresponding convex lens, i.e., a convergent lens, thereby forming convergent lens lines 1-3 with 128-2048 or even more convergent lenses. The convergent lenses in the convergent lens lines 1-3 correspond to the three primary colors emitting diode units in the three primary colors emitting diode lines 1-2 one by one, and the convergent lens lines 1-3 have the function of focusing the color visible light produced by the three primary colors emitting diode lines 1-2 to form color visible light lines to irradiate the light beam lens 1-4. The light beam lens 1-4 keeps parallel with the convergent lens lines and the three primary colors emitting diode lines. Meanwhile, the lumen emitting diode units 1-10 produce white/colorless lumen visible light to also irradiate the light beam lens 1-4 to form, before the light beams lens 1-4, mixed color visible light formed by color visible light lines and lumen visible light, and the mixed color visible light penetrates the light beam lens 1-4 and the light beam slit 1-5 to be subjected to parallel processing and constrained into narrow bars, wherein the light beam slit 1-5 and the light beam lens 1-4, the convex lens lines 1-3, and the three primary colors emitting diode lines 1-2 keep parallel in position; the mixed color visible light having penetrated the light beam lens 1-4 and the light beam slit 1-5 to have been subjected to parallel processing and constrained into narrow bars irradiate the arc mirror surface of the mirror surface triple prism or mirror surface multiprism 1-8, and according to the principle that an incidence angle of light is equal to a reflection angle thereof, the mirror surface triple prism or mirror surface multiprism 1-8 reflects the mixed color visible light to the negative lens 1-7. The mixed color visible light penetrates the negative lens 1-7 and is diffused in a single direction and produces a visible light color video image on a desired plane or screen, wherein the curvature of the negative lens 1-7 meets the aspect ratio requirement of video image.

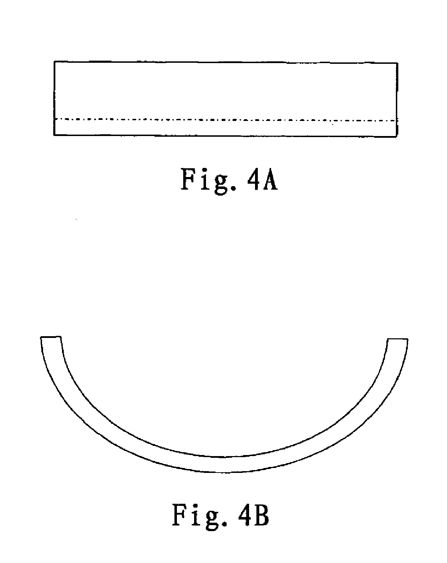

Fig. 4A and Fig. 4B are frontal and profile views of partial enlargement of the negative lens shown in Fig. 3. The negative lens 1-7 has the function of causing the mixed color visible light to penetrate the negative lens 1-7 and to be diffused in a single direction, the curvature of the negative lens 1-7 deciding a single-direction diffusion degree of video image; a setting is made according to the requirement that the mirror surface triple prism or mirror surface multiprism reflects mixed color visible light to form video image, thereby forming a visible color video image which satisfies the requirements of video movies, television or access to the Internet. Further, a lens group including a plurality of negative lenses or other lenses, with the negative lenses as the major, can be set according to the specific requirement, and the lens group control signals CONTROL [7..8] controls the single-direction diffusion degree of the mixed color visible light, and focusing and other processing is performed for its definition.

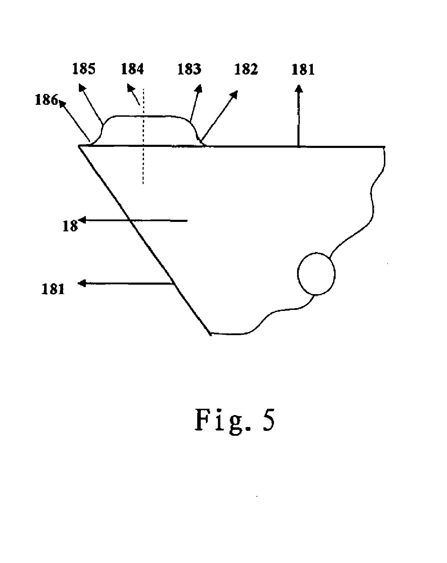

The mirror surface triple prism or mirror surface multiprism 1-8 keeps parallel with the light beam slit 1-5 in position and is coaxial with the electric machine 1-6. The mirror surface triple prism or mirror surface multiprism 1-8 is in a triple-prism or multiprism shape made from a light substance material, and its triple-prism surfaces or multipleprism surfaces are subjected to surface mirror finishing so that the mirror surface is capable of producing a high reflectivity. Each mirror surface of the mirror surface triple prism or mirror surface multiprism 1-8 preferably has an arc mirror surface which is subjected to surface mirror finishing so that the arc mirror surface is capable of producing a high reflectivity and the pixels of the reflected mixed color visible light are uniformly distributed on an irradiating plane and the pixels of the reflected mixed color visible light are uniformly distributed on an irradiating plane. Fig. 5 is a view of partial enlargement of the mirror surface triple prism 1-8 shown in Figs. 2 and 3, and on each prism surface 181 of the mirror surface triple prism 1-8, the arc mirror surface is smoothly jointed with the prism surface 181 at a first arc 182 and a second arc 186, and a third arc 183 and a fourth arc 185 are smoothly jointed with the arc mirror surface 184. The arc mirror surface starts receiving and reflecting the mixed color visible light at its starting point 182 and stops receiving and reflecting the mixed color visible light at its ending point 186, and the mirror surface triple prism or mirror surface multiprism 1-8 reflects the received mixed color visible light. According to the principle that the incidence angle of light is equal to the reflection angle thereof, the arc mirror surface of the mirror surface triple prism or mirror surface multiprism 1-8 reflects the mixed color visible light to the negative lens 1-7.

In the apparatus for projecting video image as shown in Figs. 1, 2 and 3, the interface 1 receives analog video signals, the video signal converting unit 3 converts the analog video signals to digital video signals, the FIFO memory unit 4 assigns time character to the digital video signals, and the series/parallel conversion processing unit 5 converts the digital video signals to parallel video data streams; the interface 1-1 of the color visible light video image playing unit CLVIP 6 receives parallel video data streams P-RGB from the serial/parallel converting unit 5, the rotating speed of the electric machine 1-6 and synchronization control signals V-RGB [1..3] generated by the CPU 2 , control signals CONTROL [1..6] of the lumen emitting diode units 1-10, lens group control signals CONTROL [7..8], and the like. The three primary colors emitting diode lines 1-2 in the color visible light video image playing unit CLVIP 6 comprise a plurality of three primary colors emitting diode units and the color visible light produced by each three primary colors emitting diode unit forms a basic pixel unit; the CPU 2 controls, according to the time character stipulated by the CPU 2, the FIFO memory unit 4 to output video data streams H-RGB with time character in periods and segments, each segment of the video data streams H-RGB with time character corresponding to a frame of video image; the CPU 2 controls the serial/parallel conversion processing unit 5 to receive each segment of the video data streams H-RGB with time character and produces a plurality sets of parallel video data streams P-RGB in periods, the plurality of sets of parallel video data streams P-RGB producing each row of a frame of video image in periods. The three primary colors emitting diode lines 1-2, under excitation of the parallel video data streams P-RGB, allow the corresponding three primary colors emitting diode units to be illuminated to produce color visible light of various colors; the convergent lens lines 1-3 comprise a convergent lens configured at a light emitting end of each three primary colors emitting diode unit, thereby focusing color visible light produced by each three primary colors emitting diode unit to form color visible light lines; the lumen emitting diode units 1-10 control, under control of the control signals CONTROL [1..6] of the CPU, illuminating one to plural sets of lumen emitting diodes to produce lumen visible light according to different lumen illumination requirements; the color visible light lines and the lumen visible light form mixed color visible light before the light beams lens 1-4, the light beam lens 1-4 receives the mixed color visible light, and the mixed color visible light penetrates the light beam lens 1-4 and the light beam slit 1-5 to be subjected to parallel processing and constrained into narrow bars; the electric machine 1-6 rotate, under control of the control signals V-RGB [1..3] of the CPU 2, at a constant speed in a constant direction; the mirror surface triple prism or mirror surface multiprism 1-8 is coaxial with the electric machine 1-6 and driven by the electric machine 1-6 to synchronously rotate, and the mirror surface triple prism or mirror surface multiprism 1-8 receives and reflects the mixed color visible light constrained into narrow bars; the negative lens 1-7 receives the mixed color visible light reflected through the mirror surface triple prism or mirror surface multiprism 1-8, and the mixed color visible light penetrates the negative lens 1-7 and is diffused in a single direction to irradiate a certain plane, thereby forming a row of a color video image.

The electric machine 1-6 drives the mirror surface triple prism or mirror surface multiprism 1-8 to rotate at a constant speed in a constant direction, so that the arc mirror surface of the mirror surface triple prism or mirror surface multiprism 1-8 produces continuous changes of angle. The three primary colors emitting diode lines 1-2 produce, under excitation of a next set of parallel video data streams P-RGB, a next mixed color visible light constrained into narrow bars through the convergent lens lines 1-3, the lumen emitting diode units 1-10, the light beam lens 1-4 and the light beam slit 1-5. There exists a time T1 between receiving the last and present sets of parallel video data streams P-RGB by the three primary colors emitting diode lines 1-2, and during the time T1, the electric machine rotates and synchronously drives the mirror surface triple prism or mirror surface multiprism to synchronously rotate by an angle at a constant speed in a constant direction. When the mixed color visible light irradiates the arc mirror surface of the mirror surface triple prism or mirror surface multiprism 1-8, an incidence angle at which the arc mirror surface receives the mixed color visible light has been changed, namely, changing the reflection angle of the mixed color visible light. The mixed color visible light is diffused in a single direction by the negative lens 1-7 to irradiate a next position of the same plane, thereby forming a next row of the color video image. When all of these are made continuous, a picture, i.e., a frame of color video image picture is thus formed.

When the mirror surface triple prism or mirror surface multiprism 1-8 rotates to the next prism surface 181, the CPU 2 controls the FIFO memory unit 4 to output the next segment of video data streams H-RGB with time character and produces a plurality of sets of parallel video data streams P-RGB in periods. The plurality of sets of parallel video data streams P-RGB, through the three primary colors emitting diode lines 1-2, the convergent lens lines 1-3, the lumen emitting diode units 1-10, the light beam lens 1-4 and the light beam slit 1-5, produce mixed color visible light constrained into narrow bars in periods. The arc mirror surface of the mirror surface triple prism or mirror surface multiprism 1-8 changes different angles in a constant direction to receive and reflect the mixed color visible light to form a next picture, i.e., the next frame of color video image picture. When all of these are made continuous, a plurality of color pictures forms a plurality of frames of color video images. Iteratively doing so, a continuous dynamic color visible picture produced by the received analog video data streams is thus formed.

Each prism surface 181 of the mirror surface triple prism or mirror surface multiprism 1-8 preferably has an arc mirror surface which has the function of enabling the pixels of the reflected mixed color visible light on an irradiated plane to be distributed uniformly; the arc mirror surface receives and reflects the mixed color visible light provided by the light beam slit 1-5; the arc mirror surface starts receiving and reflecting the mixed color visible light at the starting point 182, i.e., the starting point of a color video image picture, and the arc mirror surface stops receiving and reflecting the mixed color visible light at the ending point 186, i.e., a terminating point of a color video image picture; the output of video data streams H-RGB with time character is started at the starting point of the arc mirror surface of the prism surface and is stopped at the terminating point of the arc mirror surface; the electric machine 1-6 drives the mirror surface triple prism or mirror surface multiprism 1-8 to rotate to the terminating point of the arc mirror surface, and the CPU 2 controls the FIFO memory unit 4 to stop the output of video data streams H-RGB with time character.

The negative lens 1-7 is a video image playing window for the color visible video image playing unit CLVIP 6 and the curvature of the negative lens 1-7 decides the single-direction diffusion degree of the video image, namely, deciding whether the produced image satisfies the aspect requirements of video image; a plurality of negative lenses 1-7 and other lens groups may form a lens group according to the specific requirements and the lens group control signals CONTROL [7..8] control the single-direction diffusion degree of the mixed color visible light and perform focusing and other processing for its definition.

Brief description of the process for producing a color video image is made below:
The analog video signals received by the interface circuit 1 are converted by the video signal converting unit 3 to digital video data streams, the FIFO FIFO1-FIFO3 memory unit 4 assigns time character to the digital video data streams, and the serial/parallel conversion processing unit 5 converts the digital video data streams to parallel video data streams P-RGB; the interface 1-1 of the color visible light video image playing unit CLVIP 6 receives the parallel video data streams P-RGB from the serial/parallel converting unit 5, the rotating speed of the electric machine 1-6 and synchronization control signals V-RGB [1..3] produced by the CPU, the control signals CONTROL [1..6] of the lumen emitting diode units 1-10, the lens group control signals CONTROL [7..8] and the like;
The lumen emitting diode units 1-10 in the color visible light video image playing unit CLVIP 6 produces lumen visible light according to the lumen control signals CONTROL [1..6]; the parallel video data streams P-RGB control the three primary colors emitting diode lines 1-2 to produce color visible light; the color visible light is focused by the convergent lens 1-3 to produce color visible light lines; the color visible light lines and the lumen visible light are mixed to form mixed color visible light; the mixed color visible light penetrates the light beam lens 1-4 and the light beam slit 1-5 to be subjected to parallel processing and constrained into narrow bars and then to irradiate the arc mirror surface of the mirror surface triple prism or mirror surface multiprism 1-8.

The mirror surface triple prism or mirror surface multiprism 1-8 rotates at a constant speed in a constant direction under control of control signals for synchronous rotation of the electric machine, and the angle of the arc mirror surface of the mirror surface triple prism or mirror surface multiprism 1-8 changes, that is, change an incidence angle of the mixed color visible light, namely, changing the reflection angle of the mixed color visible light; the incidence angle of the mixed color visible light changes at a constant speed in a constant direction, so does the corresponding reflection angle thereof; an incidence angle at which the mixed color visible light continuously produced under the effect of the lumen illumination control signals generated by the parallel video data streams P-RGB and the microprocessor CPU 2 irradiates the arc mirror surface of the mirror surface triple prism or mirror surface multiprism continuously changes at a constant speed, and the mirror surface triple prism or mirror surface multiprism produce mixed color visible light reflected at a reflection angle equal to the incidence angle; the incidence angle of the continuous mixed color visible light continuously changes, so does the reflection angle of thereof, and on a certain plane irradiated by the continuous mixed color visible light, a line composed of continuous light spots of the continuous mixed color visible light in parallel with a rotating direction in which the arc mirror surface of the mirror surface triple prism or mirror surface multiprism is rotated is produced, and the line composed of continuous light spots is each row forming a color video image; that is to say, when the arc mirror surface of the mirror surface triple prism or mirror surface multiprism is rotated to a next angle, a next line of the continuous mixed color visible light is reflected, thereby forming a next row of the color video image, and when all of these are made continuous, a visible light video image is thus formed; when the mirror surface triple prism or mirror surface multiprism is rotated to the ending point of the mirror surface, the CPU controls the FIFO memory unit to stop the output of video data streams with time character, namely, controlling the corresponding three primary colors or multiple primary colors emitting diode unit to stop irradiation, while when the mirror surface triple prism or mirror surface multiprism is rotated to the starting end of the next mirror surface, the CPU controls the FIFO memory chip to start the output of data streams with time character, namely, controlling the three primary colors or multiple primary colors emitting diode unit corresponding to the parallel video data streams to start irradiation; the reflection produced by the continuous mixed color visible light forms a next visible light video image via the negative lens, and iteratively doing so, a continuous dynamic color visible picture provided by the received analog signal data streams is thus formed.

The mixed color visible light forms rows or columns of video image and the columns or rows of the video image are obtained by rotating the mirror surface of the mirror surface triple prism or mirror surface multiprism to produce different incidence angles for the mixed color visible light and reflect the mixed color visible light; a projection image of the mirror length of the negative lens only having the mirror surface triple prism or mirror surface multiple prism is widened in a single direction, namely, widening rows or columns of the video image, so that the specific aspect ratio of the projection image satisfies the video image requirement.

In the apparatus for projecting video image in the present invention, respective elements and devices of the circuit parts are all arranged on a PCB circuit board, and the cable and the interface connect the respective units for producing signals and receiving units. For example, the cable is used to connect the PCB board and the interface of the color visible light video image playing unit CLVIP, and the cable provides various signals and power supply.

When the apparatus for projecting video image in the present invention is integrated on another video image receiving apparatus, the PCB board and the color visible light video image playing unit CLVIP are both fixed on the apparatus, and the cable and the interface connect the respective units for producing and receiving signals.

When the apparatus for projecting video image in the present invention separately exists, it is necessary to fix the PCB board and the color visible light video image playing unit CLVIP by using an external frame, and the cable and the interface connect the respective units for producing and receiving signals, a video input signal interface and a video image playing window being made on the external frame.

For example, when the video image requires 1024*768*30 frames per second, the color visible video image playing unit CLVIP 6 inputs parallel video data streams P-RGB in 1024*3 bits via the signal and power supply interface 1-1; 1024 three primary colors emitting diode units in the three primary color emitting diode lines 1-2 are excited by the corresponding signals to emit light to produce 1024 color visible apertures in one line to be focused through the convergent lens lines 1-3 to obtain 1024 color visible light spots in one line, i.e., 1024 pixels of each row. Meanwhile, the signal and power supply interface 1-1 receives lumen illumination signals CONTROL [1..6] to control the lumen emitting diode units 1-10 to produce lumen visible light. The lumen visible light is mixed with the 1024 color visible light spots in one row before the light beam lens 1-4 to form mixed color visible light. The mixed color visible light, after penetrating the light beam lens 1-4 and the light beam slit 1-5 to be subjected to parallel processing and constrained into narrow-barred mixed color visible light, irradiates the arc mirror surface of the mirror surface triple prism or mirror surface multiprism 1-8. The arc mirror surface of the mirror surface triple prism or mirror surface multiprism 1-8 reflects the received mixed color visible light. The mixed color visible light penetrates the negative lens 1-7 and is diffused in a single direction to produce a row of mixed color visible light composed of 1024 color visible light spots and lumen visible light on a plane or screen irradiated by the negative lens; when the arc mirror surface of the mirror surface triple prism or mirror surface multiprism 1-8 is rotated to a next angle, the received mixed color visible light composed of a next set of 1024 color visible light spots and lumen visible light is reflected, and the mixed color visible light penetrates the negative lens 1-7 and is diffused in a single direction, thereby producing a next row of mixed color visible light composed of 1024 color visible light spots and lumen visible light is produced on a plane or screen irradiated by the negative lens; the continuous parallel video data streams P-RGB produce in periods 768 sets of parallel video data streams in 1024 bits to pass through the three primary colors emitting diode units 1-2, the convergent lens 1-3, the light beam lens 1-4, the light beam slit 1-5 and the ac mirror surface of the mirror surface triple prism or mirror surface multiprism 1-8, and when the electric machine 1-6 drives the mirror surface triple prism or mirror surface multiprism 1-8 to rotate at 768 angles, each of 768 sets of mixed color visible light in 1024 bits is reflected to a different position on the same plane. It can be seen that, each arc mirror surface of the mirror surface triple prism or mirror surface multiprism 1-8 rotates at 768 angles and reflects the mixed color visible light at each angle, so that the mixed color visible light composed of 1024 color visible light spots produced by the three primary colors emitting diode lines 1-2 form a frame of color image picture with 1024*768 pixels. The color dynamic image is formed by a plurality of frames of color image pictures and in the present example is 30 frames/second; the number of turns per second of the mirror surface triple prism or mirror surface multiprism 1-8, i.e., the rotating speed of the mirror surface triple prism or mirror surface multiprism 1-8, can be calculated by dividing 30 frames by the number of arc mirror surface of the mirror surface triple prism or mirror surface multiprism 1-8. When the rotating speed of the mirror surface triple prism is set as 10 turns/second that is equal to the division of 30 frames by 3, the number of arc mirror surfaces, a dynamic color image with 1024*768*30 frames/second is obtained.

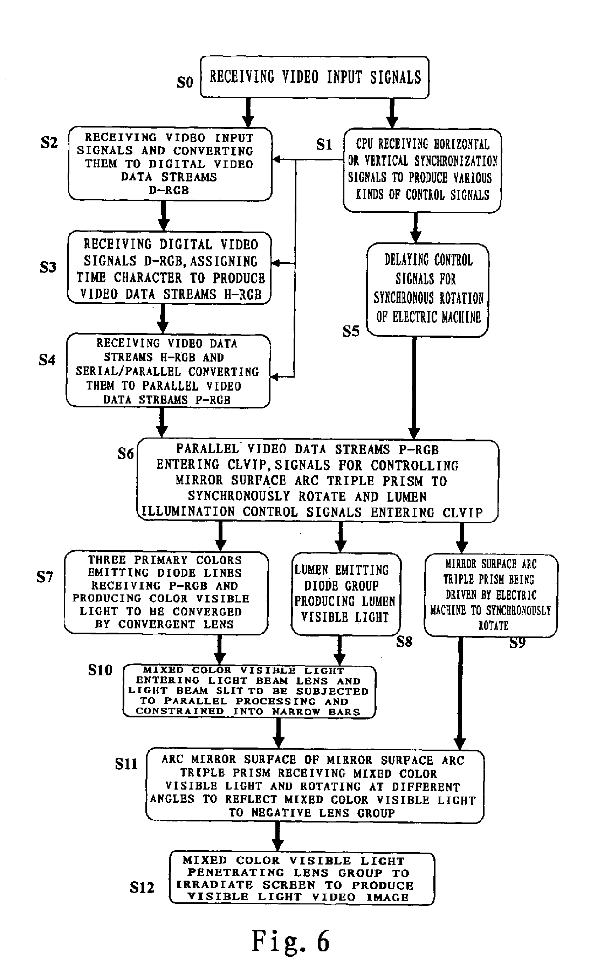

Fig. 6 shows a schematic workflow diagram of the method for projecting video image according to the present invention.

In step S0, video input signals inclusive of RED (R), GREEN (G), and BLUE (B) signals, horizontal synchronization signals HSYNC and vertical synchronization signals VSYNC are received.

In step S1, the CPU receives the horizontal synchronization signals HSYNC or the vertical synchronization signals VSYNC as synchronization reference signals to produce various kinds of control signals: control signals SDA and SCL of the video signal converting unit, control signals of the FIFO memory unit, control signals of the serial/parallel converting unit, control signals of the lens group with the negative lens as the primary, the electric machine rotating speed and synchronization control signals for controlling the electric machine to rotate and synchronously drive the mirror surface triple prism or mirror surface multiprism, lumen illumination signals for controlling the lumen emitting diode units to produce lumen visible light, and other control signals.

In step S2, the video signal converting unit 3, under control of the control signals SDA, SCL, converts the received video input signals to digital video data streams.

In step S3, the FIFO memory unit receives and temporarily stores the digital video data streams provided by the video converting unit, converts the digital video data streams to video data streams with time character and outputs in segments, according to the CPU program setting, the video data streams with time character, an output clock of the FIFO memory unit being faster than an input clock, wherein each segment of video data streams with time character corresponds to a frame of video image.

In step S4, the series/parallel converting unit receives each segment of video data streams with time character from the FIFO memory unit, converts, under control of the CPU, each segment of video data streams H-RGB with time character to continuous parallel video data streams in the number of pixels required by the specific definition, and outputs in periods each set of parallel video data streams , wherein each sets of parallel video data streams corresponds to a row of pixel points in a frame of video image.

In step S5 in synchronization with steps S2-S4, the electric machine rotating speed and synchronization control signals produced by the CPU are delayed by a certain time, so as to guarantee the synchronization with the conversion from the video input signals to parallel video data streams.

In step S6, the color visible light video image playing unit CLVIP simultaneously receives the parallel video data streams from the serial/parallel converting unit, the electric machine rotating speed and synchronization control signals produced by the CPU, lumen illumination signals and lens group control signals, etc.

Steps S7, S8 and S9 are performed synchronously. In step S7, the parallel video data streams excite the corresponding three primary colors emitting diode unit in the three primary colors emitting diode lines 1-2 to emit light, namely, producing color visible light, to be converged by the convergent lens to produce color visible light lines; in step S8, the lumen emitting diode units, under control of the lumen illumination control signals, illuminate one to plural sets of lumen emitting diodes according to the lumen requirement so as to produce lumen visible light; in step S9, the electric machine, under control of the electric machine rotating speed and synchronization control signals, rotates and drives the mirror surface triple prism or mirror surface multiprism coaxial therewith to rotate at a constant speed in a constant direction, namely, driving the arc mirror surface on each prism surface of the mirror surface triple prism or mirror surface multiprism to rotate synchronously.

In step S 10, the color visible light lines and the lumen visible light are mixed before the light beam lens to form mixed color visible light, and the mixed color visible light irradiates the light beam lens to be subjected to parallel processing and then penetrates the light beam slit to be constrained into narrow-barred mixed color visible light, so as to be provided to the mirror surface triple prism or mirror surface multiprism;

In step S11, the mirror surface triple prism or mirror surface multiprism reflects the received mixed color visible light and reflects the mixed color visible light to the negative lens according to the principle that an incidence angle of light is equal to a reflection angle thereof. In the meantime, the mirror surface triple prism or mirror surface multiprism rotates at a constant speed in a constant direction under control of the control signals for synchronous rotation of the electric machine, and the angle of the arc mirror surface of the mirror surface triple prism or mirror surface multiprism changes, namely, changing the incidence angle of the mixed color visible light which means changing the reflection angle of the mixed color visible light; the incidence angle of the mixed color visible light changes at a constant speed in a constant direction, so does the corresponding reflection angle thereof; an incidence angle at which the mixed color visible light continuously produced under the effect of the lumen illumination control signals generated by the parallel video data streams and the microprocessor irradiates the arc mirror surface of the mirror surface triple prism or mirror surface multiprism continuously changes at a constant speed, and the mirror surface triple prism or mirror surface multiprism produce mixed color visible light reflected at a reflection angle equal to the incidence angle; the incidence angle of the continuous mixed color visible light continuously changes, so does the reflection angle of thereof, and on a certain plane irradiated by the continuous mixed color visible light, a line composed of continuous light spots of the continuous mixed color visible light in parallel with a rotating direction in which the arc mirror surface of the mirror surface triple prism or mirror surface multiprism is rotated is produced, and the line composed of continuous light spots is each row forming a color video image; that is to say, when the arc mirror surface of the mirror surface triple prism or mirror surface multiprism is rotated to a next angle, a next line of the continuous mixed color visible light is reflected, thereby forming a next row of the color video image, and when all of these are made continuous, a visible light video image is thus formed; when the mirror surface triple prism or mirror surface multiprism is rotated to the ending point of the mirror surface and to an angle contained between two mirror surfaces, the CPU controls the FIFO memory unit to stop the output of video data streams with time character, namely, controlling the corresponding three primary colors or multiple primary colors emitting diode unit to stop irradiation, while when the mirror surface triple prism or mirror surface multiprism is rotated to the starting end of the next mirror surface, the CPU controls the FIFO memory chip to start the output of data streams with time character, namely, controlling the three primary colors or multiple primary colors emitting diode unit corresponding to the parallel video data streams to start irradiation; the reflection produced by the continuous mixed color visible light forms a next visible light video image via the negative lens, and iteratively doing so, a continuous dynamic color visible picture provided by the received analog signal data streams is thus formed;

In step S12, the negative lens receives the mixed color visible light reflected through the arc mirror surface of the mirror surface triple prism or mirror surface multiprism; the mixed color visible light penetrates the negative lens and is diffused in a single direction to irradiate a certain plane to form a color video image, thereby producing a visible light color video image on a desired plane or screen.

The present invention greatly differs from the projection principles of the previous projection modes, such as the three primary colors CRT projection mode, and LCD and LCOS direct-irradiation or reflection, and DMD reflection digital microlens chip.

The present invention has the following main features: video input signals are received via the interface 1; the CPU 2 produces various kinds of control signals; the signal converting unit 3 realizes conversion of video input signals to digital video data streams D-RGB; the FIFO memory unit 4 assigns time character to the digital video data streams D-RGB to become video data streams H-RGB with time character; the serial/parallel converting unit 5 converts video data streams H-RGB with time character to parallel video data streams P-RGB in the number of pixels required by the specific definition; the three primary colors emitting diode lines 1-2 receive the parallel video data streams P-RGB so that the corresponding three primary colors emitting diode unit produces color visible light; the convex lens lines, i.e., convergent lens lines 1-3 are used to focus the color visible light produced by the three primary colors emitting diode units in each three primary colors emitting diode lines 1-2 to form color visible light lines and the focusing point of the color visible light lines is the light beam lens 1-4; the lumen emitting diode units produce lumen visible light to irradiate the light beam lens 1-4; the color visible light lines and the lumen visible light form mixed color visible light before the light beam lens 1-4, and the mixed color visible light penetrates the light beam lens 1-4 so that the mixed color visible light become parallel mixed color visible light; the mixed color visible light penetrates the light beam slit 1-5 to be subjected to another parallel processing and narrowed, thereby obtaining the mixed color visible light constrained into narrow bars, namely, forming a row of video image; each row of the video image is obtained by rotating the mirror surface triple prism or mirror surface multiprism 1-8 at different angles and reflecting the mixed color visible light. Owing to the use of the negative lens 1-7, a projection image of the mirror length of the negative lens only having the mirror surface triple prism or mirror surface multiple prism 1-8 is widened in a single direction, namely, widening a row of the video image, so that the aspect ratio of the specific projection image meets the requirement.

The present invention does not further describe voice in synchronization with video image, and the voice is controlled by the CPU by providing other signals. Since the video image needs to be processed for a certain time, the voice should be delayed by the same time to keep synchronization with the video image.

The apparatus for projecting video image in the present invention further comprises composite elements including a power source, a mechanical rotating bearing or axle sleeve of the triple prism 1-8 and the like, as well as common control signal lines. Here, it is unnecessary to go into details.

In a substitutable embodiment of the present invention, the electric machine 1-6 is substituted by a rotating magnetic field similar to an AC electric machine, namely, using the mirror surface triple prism or mirror surface multiprism 1-8 as rotors and setting rotor coils at a position where the mirror surface triple prism or mirror surface multiprism 1-8 is near to the support bearing, setting stator coils at a position where the housing 1-9 comprises the rotor coils of the mirror surface triple prism or mirror surface multiprism 1-8, providing AC electric signals and rotating speed and synchronization control signals, so that the mirror surface triple prism or mirror surface multiprism rotates in a required rotating speed in synchronization with the video signals. Thus, the steadiness and endurance of the present invention is improved.

In other embodiments of the present invention, the three primary colors emitting diode lines 1-2 and the convergent lens lines 1-3 can be integrated; the convergent lens lines 1-3 can be substituted by a single convergent lens having the same convergence function.

The serial/parallel converting unit 5 can be incorporated into the color visible light video image playing unit CLVIP 6, and the signal leads of the serial/parallel converting unit 5 corresponding to the three primary colors emitting diode lines are arranged on a dedicated circuit board.

The present invention has a wide applicable scope. For example, it can be integrated to a mobile phone, a portable computer, home theater, TV set, etc., and can also separately form a projecting apparatus.

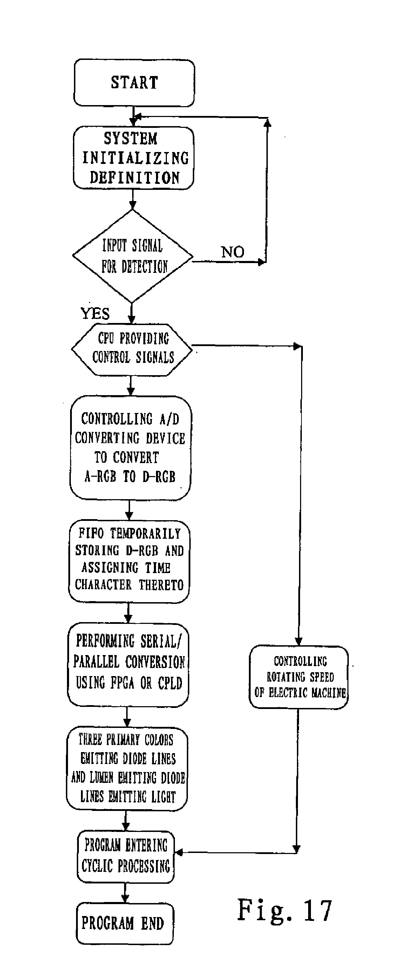

Fig. 17 shows a partial workflow diagram for a program of the apparatus for projecting video image. The microprocessor is powered on to operate and first the microprocessor makes an initialized configuration setting of itself; after the initialization setting is performed, it is detected whether an input terminal of the apparatus for projecting video image inputs video signals; if the input of video signals exists, the microprocessor produce, according to synchronization signals in the received video signals, various kinds of control signals such as FIFO input/output control signals, synchronization control signals, lumen illumination control signals, I2C signals, synchronization control signals for the electric machine, and the like; the microprocessor produces the FIFO input/output control signals at any time so that the FIFO memory unit outputs digital video data streams in periods and in segments according to the specified time; the microprocessor controls the serial/parallel converting chip to output parallel video data streams and controls the three primary colors or multiple primary colors emitting diode units in the three primary colors or multiple primary colors emitting diode lines to emit light under excitation of the parallel video data streams to produce color visible light; meanwhile, the lumen emitting diode group produces lumen visible light, and the mirror surface triple prism or mirror surface multiprism is driven by the electric machine to rotate at a constant speed in a constant direction; for continuous video data streams, the microprocessor performs the cyclic processing of the above steps of the program; upon the necessity for shutdown, the microprocessor terminates the operation of the program.

Detailed descriptions of present invention are made in the above in accordance with specific embodiments and figures, but these descriptions are not for limiting the present invention. Without departing from the spirit and scope of the present invention, modifications and improvements can be made thereto.

## Claims

1. An apparatus for projecting video image, comprising:
an interface (1) for receiving video input signals inclusive of video signals and synchronization signals;
a CPU (2) for producing various kinds of control signals in accordance with the synchronization signals from the interface (1);
a signal converting unit (3) for converting the video input signals to digital video data streams in accordance with the controls signals from the CPU (2);
a First-in First-out memory unit (4) for receiving and temporarily storing digital video signals from the signal converting unit (3), converting said digital video signals to video data streams with time character in accordance with the control signals from the CPU (2), and outputting the video data streams with time character under control of the CPU (2);
a serial/parallel converting unit (5) for receiving the video data streams with time character from the First-in First-out memory unit (4) in accordance with the control signals from the CPU (2) and serial/parallel converting them to parallel video data streams;
three primary colors or multiple primary colors emitting diode lines (1-2) comprising a plurality of three primary colors or multiple primary colors emitting diode units, for causing the corresponding three primary colors or multiple primary colors emitting diodes units to emit light under the excitation of the parallel video data streams, so as to produce color visible light of various different color combinations;
convergent lens lines (1-3) comprising a convergent lens configured at a luminous end of each of the three primary colors or multiple primary colors emitting diode units, for focusing the color visible light produced by each of the three primary colors or multiple primary colors emitting diode units to form color visible light lines;
lumen emitting diode units (1-10) for controlling illuminating one to plural sets of lumen emitting diodes to produce lumen visible light in accordance with the control signals of the CPU, based on the conditions required by different lumen illuminations;
a light beam lens (1-4) for receiving mixed color visible light formed by the color visible light lines and the lumen visible light, the mixed color visible light penetrating the light beam lens and subjected to parallel processing;
a light beam slit (1-5) having a slit of a predetermined width for performing parallel processing of the mixed color visible light and constraining it to narrow bars;
a mirror surface triple prism or a mirror surface multiprism (1-8), driven by an electric machine (1-6) to synchronously rotate, for receiving the mixed color visible light in narrow bars at a constantly variable incidence angle and reflecting it;
a negative lens (1-7) for receiving the mixed color visible light in narrow bars reflected by the mirror surface triple prism or mirror surface multiprism, the mixed color visible light penetrating the negative lens and being transversely diffused, the negative lens having a curvature that meets the requirements for forming a visible color video image by the mixed color visible light, so that the mixed color visible light is uniformly diffused in a single direction and projected on the screen;
wherein the incidence angle at which the continuous mixed color visible light produced under the effect of the parallel video data streams and lumen control signals irradiates a mirror surface of the mirror surface triple prism or mirror surface multiprism varies at a constant speed in a constant direction, so does a reflection angle of the corresponding mixed color visible light; thus, different positions on a certain plane irradiated by the continuous mixed color visible light reflected produce lines composed of light spots of the continuous mixed color visible light parallel with the turning direction of the mirror surface triple prism or mirror surface multiprism, and the lines composed of continuous light spots constitute each line of the color video image, thereby forming a visible video image; when the mirror surface triple prism or mirror surface multiprism is rotated to an angle contained by respective mirror surfaces, the First-in First-out memory chip is controlled to stop the output of data streams with time character, namely, controlling the corresponding three primary colors or multiple primary colors emitting diode units to stop irradiation, while when the mirror surface triple prism or mirror surface multiprism is rotated to a starting end of the next mirror surface, the First-in First-out memory chip is controlled to start the output of data streams with time character, namely, controlling the corresponding three primary colors or multiple primary colors emitting diode units to start irradiation, and the reflection produced by the continuous mixed color visible light forms a next visible light video image, and iteratively doing so, a continuous dynamic color visible picture provided by the received analog signal data streams is thus formed.

2. The apparatus for projecting video image according to claim 1,
wherein the serial/parallel converting unit (5) can be integrated into a color visible light video image playing unit CLVIP (6), and the signal leads of the serial/parallel converting unit (5) corresponding to the three primary colors emitting diode lines are arranged on a dedicated circuit board.

3. The apparatus for projecting video image according to claim 1 or 2,
wherein the color visible light video image playing unit CLVIP (6) comprises inside a casing (1-9): three primary colors emitting diodes lines (1-2) and convex lens lines (1-3) mounted on a support (191), lumen emitting diodes units (1-10) mounted on a support (192), a light beam lens (1-4) and a light beam slit (1-5) mounted on a support (193), an electric machine (1-6) mounted on a support (194), a mirror surface triple prism or mirror surface multiple prism (1-8) mounted on the support (194) and a support (195), the electric machine (1-6) being coaxial with the mirror surface triple prism or mirror surface multiple prism (1-8) at the support (194), and comprises a negative lens (1-7) mounted on the casing (1-9); wherein the electric machine (1-6) drives the mirror surface triple prism or mirror surface multiple prism (1-8) to synchronously rotate; a housing (1-9) connects the respective supports (191-195) by soldering or using a heat-resistant adhesive substance; inside the casing (1-9), the parts, other than light emitting parts and light receiving parts, are coated with a non-reflective material, and the casing (1-9) and the respective supports (191-195) are all composed of a metal or a substance having a good heat dissipation property; wherein the negative lens (1-7) causes the mixed color visible light to penetrate and diffuses the mixed color visible light in a single direction, and it is a video image playing window of the apparatus for projecting video image in the present invention.

4. The apparatus for projecting video image according to claim 1 or 2,
wherein the serial/parallel converting unit (5), according to the specific definition requirement, performs series/parallel conversion of the video data streams with time character to parallel video data streams in the number of pixels required by the specific definition; the mixed color visible light forms rows or columns of video image, and the columns or rows of the video image are acquired by rotating the mirror surface of the mirror surface triple prism or mirror surface multiprism to produce different incidence angles for the mixed color visible light and reflecting the mixed color visible light.

5. The apparatus for projecting video image according to claim 1 or 2,
wherein the three primary colors or multiple primary colors emitting diode lines (1-2) are composed of three primary colors or multiple primary colors emitting diode units arranged in one line or two lines, a bright RGB laser luminotron or a bright RGB LED forming a three primary colors emitting diode unit, and they emit light in the same direction and lead out corresponding signal connections; the three primary colors or multiple primary colors emitting diode lines have the three primary colors emitting diode units the number of which is the same as the number of pixels of the definition of the parallel video data streams, and under the excitation of the parallel video data streams, the corresponding three primary colors emitting diodes units are irradiated to emit light thereby to produce color visible light of various color combinations; the three primary colors emitting diode lines and the convergent lens lines can be integrated; in order to improve color degrees, the three primary colors emitting diode units can be substituted by the multiple primary colors emitting diode units; the convergent lens lines can be substituted by a single convergent lens having the same convergence function; the light beam lens and the light beam slit can be integrated.

6. The apparatus for projecting video image according to claim 1, 2 or 3,
wherein each prism surface (181) of the mirror surface triple prism or mirror surface multiprism (1-8) has an arc mirror surface so that the pixels of the reflected mixed color visible light on an irradiating plane are uniformly distributed; the arc mirror surface is subjected to the surface mirror finishing to produce a high reflectivity, the arc mirror surface is smoothly jointed with the prism surface (181) at a first arc (182) and a second arc (186), and a third arc (183) and a fourth arc (185) are smoothly jointed with the arc mirror surface (184); the arc mirror surface starts receiving and reflecting the mixed color visible light at its starting point (182) and stops receiving and reflecting the mixed color visible light at its ending point (186).

7. The apparatus for projecting video image according to claim 1 or 2,
wherein the curvature of the negative lens (1-7) is selected so that a projection image of the mirror length of the negative lens only having the mirror surface triple prism or mirror surface multiple prism is widened in a single direction, namely, widening rows or columns of video image, whereby the acquired video image meets the aspect ratio requirement and produces a visible light color video image on a desired plane or screen; a plurality of negative lenses (1-7) and other lenses can form a lens group according to specific requirements, the lens group control signals from the CPU controlling the extent to which the lens group diffuses the mixed color visible light in a single direction, focusing and other processing being performed for its definition.

8. The apparatus for projecting video image according to claim 1 or 2,
wherein the interface (1), the CPU (2), the signal converting unit (3), the First-in First-out memory unit (4), the serial/parallel converting unit (5) and the like are all arranged on a dedicated circuit board, inside the dedicated circuit board are electric bonding leads to be connected with the above parts, and the dedicated circuit board inputs and outputs various signals that are correspondingly connected via a cable and interface.

9. A method for projecting video image, comprising the steps of:
a) receiving video input signals inclusive of video signals and synchronization signals;
b) a CPU producing various kinds of controls signals in accordance with the synchronization signals;
c) converting the video input signals to digital video data streams in accordance with the control signals;
d) converting the digital video data streams via a First-in First-out memory unit to video data streams with time character in accordance with the control signals, and outputting the video data streams with time character under control of the CPU;
e) series/parallel converting the video data streams with time character to parallel video data streams in accordance with the control signals;
f) delaying electric machine rotating speed and synchronization control signals produced by the CPU by a period of time at the same time of performing steps c-e, thereby guaranteeing synchronization with the conversion from the video input signals to the parallel video data streams P-RGB;
g) three primary colors emitting diode units in three primary colors emitting diode lines emitting light under excitation of the corresponding parallel video data streams, to produce color visible light of different color combinations and converging the color visible light to color visible light lines; meanwhile, lumen emitting diode units controlling, under control of the CPU, illuminating one to plural sets of lumen emitting diodes to produce lumen visible light according to different lumen illumination requirements;
h) the color visible light lines and the lumen visible light forming mixed color visible light, the mixed color visible light being subjected to parallel processing and constrained into narrow bars;
i) a mirror surface triple prism or mirror surface multiprism rotating synchronously at a constant speed, and receiving and reflecting continuous mixed color visible light produced under control of the video data streams with time character, the continuous mixed color visible light having a continuously varied incidence angle;
j) a negative lens receiving continuous mixed color visible light in narrow bars reflected by the mirror surface triple prism or mirror surface multiprism, the continuous mixed color visible light penetrating the negative lens and irradiating a plane after being diffused in a single direction to form respective rows of a color video image, thereby forming a color visible image; and
k) controlling, when the mirror surface triple prism or mirror surface multiprism is rotated to an angle contained by respective mirror surfaces, a First-in First-out memory chip to stop the output of data streams with time character, namely, controlling the corresponding three primary colors or multiple primary colors emitting diode units to stop irradiation, whereas controlling, when the mirror surface triple prism or mirror surface multiprism is rotated to a starting end of the next mirror surface, the First-in First-out memory chip to start the output of data streams with time character, namely, controlling the corresponding three primary colors or multiple primary colors emitting diode units to start irradiation, repeating steps e-j, the reflection produced by the continuous mixed color visible light forming a next visible light video image, and iteratively doing so, a continuous dynamic color visible picture provided by the received analog signal data streams being thus formed.
